# EUROPÄISCHE PATENTSCHRIFT

(11) **EP 1 550 927 B1**
(45) Veröffentlichungstag und Bekanntmachung des Hinweises auf die Patenterteilung: **05.10.2011**
(21) Anmeldenummer: 04028068.7
(22) Anmeldetag: 26.11.2004
(51) Int. Cl.: G05D 23/19, F24F 11/00, G05D 23/20

(54) **Verfahren und Anordnung sowie Computerprogramm zur Ermittlung einer Steuergrösse für eine Temperaturregelung für ein System**
Method, apparatus and computer program for the determination of a control variable for the temperature regulation of a system
Procédé, dispositif et logiciel pour la détermination d'une grandeur de commande pour contrôler la température d'un système

(30) Priorität: 05.01.2004 DE 102004001193
(43) Veröffentlichungstag der Anmeldung: 06.07.2005
(73) Patentinhaber: Behr GmbH & Co. KG, 70469 Stuttgart (DE)
(72) Erfinder: Greul, Frank, 70499 Stuttgart (DE); Riedel, Rudolf, Dr., 75181 Pforzheim (DE); Wolfangel, Peter, 71272 Renningen (DE)
(74) Vertreter: Grauel, Andreas

(56) Entgegenhaltungen:
- US-A- 5 197 666
- US-A- 5 209 398
- US-A- 6 098 893
- US-B1- 6 296 193

## Beschreibung

Die Erfindung betrifft eine Temperaturregelung für ein System.

Eine Temperaturregelung, in diesem Fall eine Temperaturregelung für einen Raum, ist wie nachfolgend beschrieben aus dem Stand der Technik bekannt.

Aus dem Stand der Technik ist ein Regelsystem für eine Temperaturregelung bekannt.

Derartige Regelsysteme versuchen, eine bestimmte physikalische Größe, in diesem Fall eine Temperatur im Raum, konstant zu halten oder nach einem vorgeschriebenem Programm zu ändern, unabhängig von irgendwelchen Störungen oder Störgrößen, wie von durch ein geöffnetes Fenster hereinströmende Kalt- bzw. Warmluft.

Dazu wird eine zu regelnde Größe (Regelgröße), in diesem Fall die Raumtemperatur, mittels einer geeigneten Messvorrichtung, in diesem Fall ein Widerstandsthermometer PT100, laufend gemessen und ihr Wert mit einem vorgegebenen Sollwert verglichen.

Die gemessene Regelgröße wird einer Regeleinrichtung zugeführt.

Der Regler, in diesem Fall ein PID-Regler, ist derart eingerichtet, dass er auf eine Abweichung der gemessenen Regelgröße vom Sollwert, bezeichnet als eine Regelabweichung e, reagiert, indem er eine Steuergröße u ermittelt. Mit dieser Steuergröße u wird ein geeignetes Stellglied, in diesem Fall eine Heiz-Kühl-Einrichtung, im Allgemeinen ein Wärmetauscher, so gesteuert bzw. betätigt, dass die Regelabweichung bzw. Regeldifferenz (Regelfehler) e, d.h. die auftretende Abweichung der Regelgröße vom Sollwert, beseitigt wird.

Anschaulich ausgedrückt, es soll unter Verwendung des Reglers eine Temperaturdifferenz zwischen einer aktuellen Raumtemperatur und einer gewünschten Raumtemperatur, welche Temperaturdifferenz beispielsweise verursacht wird durch eine Temperaturstörung bzw. Temperaturveränderung im Raum, durch Heizen oder Kühlen mittels der Heiz-Kühl-Einrichtung beseitigt werden. Die Heiz-Kühl-Einrichtung wird dabei unter Verwendung der vom Regler erzeugten Steuergröße u gesteuert.

Es kann ein dem obigem Regelsystem geregelter Temperaturverlauf des Raums dargestellt werden.

Ein Punkt A kennzeichnet darin einen Zeitpunkt eines Eintretens einer Temperaturstörung bzw. Temperaturänderung. Eine Linie B kennzeichnet eine gewünschte, möglichst konstant zu haltende Raumtemperatur.

Dabei sind zwei Parameter, eine Ausregelzeit und eine Überschwingbreite entnehmbar, unter Verwendung welcher zwei Parameter eine Qualität einer Regelung, wie obige, beurteilt werden kann.

Dabei verdeutlicht im Speziellen, hier am Beispiel der Temperaturregelung bzw. Temperaturstörung, dass im Allgemeinen bei einer schnellen bzw. abrupten Änderung oder Störung der Regelgröße und/oder bei schnellen bzw. abrupten Änderungen von auf die Regelgröße einwirkenden Randbedingungen des Systems (Systemstörung) starke Schwankungen, d.h. eine große Inkonstanz, der Regelgröße, welche Schwankungen mit fortschreitender Regeldauer abnehmen, auftreten.

Aus dem Stand der Technik ist ein weiteres, zu regelndes System bekannt, welches im Besonderen solchen schnellen und abrupten Störungen ausgesetzt ist, nämlich ein (Klima-)Windkanal.

Der aus dem Stand der Technik bekannte Klimawindkanal ist in einer "Göttinger" Bauart ausgeführt.

Klimatisierte Luft wird bei einem Klimawindkanal solcher Bauart in einem geschlossenen Kreislauf geführt. Ein Gebläse fördert die Luft über einen langen Diffusor zu einem Wärmetauscher. Hier wird die Luft temperiert, von -30 °C bis +50 °C ist jeder Wert einstellbar. Über zwei beschaufelte Umlenkecken gelangt die Luft in eine Vorkammer.

Ein Gleichrichter und Siebe sind nicht vorhanden, und trotzdem weist der Klimawindkanal eine hohe Strömungsqualität auf. Windgeschwindigkeit und Windtemperatur sind sehr gleichmäßig über einen Strahlquerschnitt verteilt.

Eine Kontraktion einer Düse, in der die Luft beschleunigt wird, ist auf zwei Abschnitte aufgeteilt. Im ersten Abschnitt erfolgt ein Einzug nur horizontal; Decke und Boden bleiben eben.

Im zweiten Abschnitt bleiben dagegen Seitenwände plan und der Einzug wird über eine Vertikale bewältigt. Dabei bleibt eine untere Kontur immer gleich. Eine obere hingegen kann in einer Höhe verfahren werden.

Dadurch ist es möglich, eine vergleichsweise kleine Düse mit einem Querschnitt von 6 m2 zu formen, was für eine Untersuchung von Pkw ausreichend ist.

In zwei Schritten kann eine obere Düsenwand angehoben und dank ihrer Elastizität auf strömungsgünstiger Kontur gehalten werden - der dadurch entstehende Querschnitt von 8 m2 ist geeignet für die Untersuchung für Vans oder Transporter. Bei weiterer Vergrößerung des Querschnitts auf 10 m2 ist der Klimawindkanal geeignet für die Untersuchung von (schweren) Lkws.

Eine Windgeschwindigkeit beträgt bei den drei Querschnitten 130 km/h, 100 km/h und 80 km/h.

Aus der Düse tritt die Luft in die offene Messstrecke, umströmt ein Fahrzeug, wird hinter diesem von einem Kollektor, beispielsweise ähnlich einem großen Trichter, aufgefangen und, damit sich der Kreislauf schließt, über zwei Umlenkecken dem Gebläse wieder zugeführt.

An einer Decke des Klimawindkanals bzw. einer Messhalle ist ein Solarium angebracht. 18 Lampen, mit denen ein Spektrum eines Sonnenlichtes nachgebildet wird, ermöglichen eine Strahlungsintensität von bis zu 1200 W/m2.

Ein Gestell ermöglicht es, eine Einfallsrichtung von Sonnenstrahlen frei zu wählen. Die Lampen sind mit Klappen versehen, mit denen das Licht schlagartig abgeschattet werden kann.

Eine relative Luftfeuchte kann durch Zugabe von Dampf oder extrem trockener Luft in einem Bereich bis zu 95 % genau eingestellt werden.

Kühlung und Klimatisierung können so in ihrem Zeitverhalten im Windkanal geändert und optimiert werden.

Verschiedene Untersuchungen im Klimawindkanal, wie zum Beispiel Leistungsuntersuchungen von Fahrzeugklimaanlagen, setzen eine hohe Klimakonstanz, insbesondere eine hohe (Wind-)Temperaturkonstanz, in dem Klimawindkanal voraus.

Schnelle und abrupte Änderungen bzw. Störungen der (Wind-)Temperatur und/oder schnelle und abrupte Änderungen von auf die Temperatur einwirkende Randbedingungen, wie Störungen der Windgeschwindigkeit, Störungen der simulierten Sonneneinstrahlung, Störungen der Luftfeuchte im Windkanal und/oder ein Starten eines Motors eines zu untersuchenden Fahrzeugs im Windkanal, können mit einem herkömmlichen Regelsystem wie im obigen beschrieben nur in unzureichender Weise ausgeregelt werden.

Anders ausgedrückt, die mit obigem herkömmlichen Regelsystem erreichbare (Wind-)Temperaturkonstanz kann für bestimmte Untersuchungen im Klimawindkanal unzureichend sein.

Die US 5 209 398 offenbart ein Verfahren zum modellbasierten Themoausgleich mit Rückkoppelung. Dabei wird ein Temperaturregelsystem beschrieben.

Die US 5 197 666 offenbart ein Verfahren zum Abschätzen von thermischen Parametern für die Klimasteuerung.

Die US 6 296 193 B1 offenbart eine Steuerung zum Betrieb einer Zweikanalluftvolumeneinheit zur Steuerung einer Kaltluft und einer Warmluftzufuhr für ein Gebäude.

Die US 6 098 893 offenbart ein Komfortsteuersystem für Gebäude, bei welchem eine Vielzahl von Gebäuden gesteuert wird unter Benutzung von Wettervorhersagedaten.

Der Erfindung liegt die Aufgabe zugrunde, eine Temperaturregelung für ein System mit schnellen und/oder abrupt auftretenden Systemstörungen anzugeben, welche eine hohe Temperaturkonstanz in dem System erlaubt.

Diese Aufgabe wird durch das Verfahren gemäß Anspruch 1, durch die Anordnung gemäß Anspruch 8, durch das Computerprogramm mit Programmcode-Mitteln gemäß Anspruch 13 und das Computerprogramm-Produkt nach Anspruch 15 zur Ermittlung einer Steuergröße für eine Temperaturregelung für ein System mit den Merkmalen gemäß dem jeweiligen unabhängigen Patentanspruch gelöst.

Bei dem erfindungsgemäßen Verfahren zur Ermittlung einer Steuergröße für eine Temperaturregelung für ein System wird zu einem vorgebbaren Zeitpunkt eine Ist-Temperatur des Systems ermittelt.

Diese Ist-Temperatur wird mit einer vorgebbaren Soll-Temperatur des Systems verglichen, wobei eine auszugleichende Temperaturdifferenz des Systems bestimmt wird.

Es wird eine Bedarfsenergie ermittelt, welche notwenig ist zu einem Ausgleich der ermittelten, auszugleichenden Temperaturdifferenz in dem System.

Weiter wird zu dem vorgegebenen Zeitpunkt eine dem System zugeführte Energie und eine von dem System abgeführte Energie ermittelt.

Unter Verwendung der Bedarfsenergie, der dem System zugeführten Energie und der vom System abgeführten Energie wird eine resultierende Gesamtenergie des Systems bestimmt.

Unter Verwendung eines Regelverfahrens eines Reglers wird aus der resultierenden Gesamtenergie die Steuergröße für die Temperaturregelung ermittelt.

Die erfindungsgemäße Anordnung zur Ermittlung einer Steuergröße für eine Temperaturregelung für ein System weist mindestens eine Temperaturermittlungseinheit auf, mit welcher zu einem vorgebbaren Zeitpunkt eine Ist-Temperatur des Systems ermittelbar ist.

Ferner weist die Anordnung mindestens eine Vergleichseinheit auf, mit welcher durch Vergleich der Ist-Temperatur mit einer vorgebbaren Soll-Temperatur des Systems eine auszugleichende Temperaturdifferenz des Systems ermittelbar ist.

Auch weist die erfindungsgemäße Anordnung eine Energieermittlungseinheit auf, mit welcher zu dem vorgebbaren Zeitpunkt eine dem System zugeführte Energie, eine von dem System abgeführte Energie und eine Bedarfsenergie ermittelbar ist, welche Bedarfsenergie notwendig ist zu einem Ausgleich der auszugleichenden Temperaturdifferenz des Systems.

Die Energieermittlungseinheit ist weiter derart eingerichtet, dass eine resultierende Gesamtenergie unter Verwendung der Bedarfsenergie, der dem System zugeführten Energie und der vom System abgeführten Energie bestimmbar ist.

Weiter ist eine Reglereinheit vorgesehen, mit welcher unter Verwendung der Gesamtenergie die Steuergröße für die Temperaturregelung ermittelbar ist.

Unter oben bezeichneten Einheiten, wie die Temperaturermittlungseinheit, die Vergleichseinheit, die Reglereinheit und die Energieermittlungseinheit, sind bei der Erfindung funktionelle Bestandteile bzw. Komponenten der erfindungsgemäßen Anordnung zu verstehen, welche als eigenständige Vorrichtungen oder Module realisiert sein können oder auch durch die ihnen jeweils zugewiesene definierte Aufgabe von anderen Einheiten und/oder Bestandteilen der erfindungsgemäßen Anordnung abgegrenzt sein können.

Die Einheiten sind dabei entsprechend der von ihnen durchgeführten Aufgabe und/oder zur Durchführung der ihnen zugewiesenen Aufgabe eingerichtet.

Ferner sind bei der Erfindung unter dem Begriff "System" alle energetischen Systeme bzw. Prozesse zu verstehen, d.h. alle Systeme, bei denen Energie in irgendeiner Form gespeichert, zugeführt, abgeführt und/oder verändert wird.

Anzumerken ist, dass die Einheiten der Anordnung derart miteinander in Verbindung stehen, dass zumindest zwischen jeweils zwei Einheiten im Allgemeinen Signale übertragbar sind.

Ferner ist anzumerken, dass im Rahmen der Erfindung der Begriff "Regelung" weit auszulegen ist, so dass unter dem Begriff "Regelung" jede Art einer Regelung und/oder einer Steuerung zu verstehen ist.

Das Computerprogramm mit Programmcode-Mitteln ist eingerichtet, um alle Schritte gemäß dem erfindungsgemäßen Verfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Verfahren durchzuführen, wenn das Programm auf einem Computer ausgeführt wird.

Die Anordnung, das Computerprogramm mit Programmcode-Mitteln, eingerichtet um alle Schritte gemäß dem erfinderischen Verfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Anschaulich gesehen basiert die Erfindung, im Gegensatz zu einer herkömmlichen direkten Temperaturregelung auf Basis eines Temperaturvergleichs bzw. einer Temperaturdifferenz, auf einer indirekten Temperaturregelung auf Basis einer Energie-/Leistungsbilanz über das (gesamte) System, bei welcher der zu regelnde Prozessparameter, die Temperatur, nur als Ergebnis von Energie-/Leistungsumsätzen angesehen wird.

Dabei werden bei der Erfindung die dem System zugeführte und die vom System abgeführte Energie bilanziert, welche mehrere Teilenergien aufweisen kann.

Da sämtliche Energieströme, die dem System zugeführt und die vom System abgeführt werden, in Summe zu einer Veränderung der Systemtemperatur über dem System führen, kann unter Verwendung dieser Temperaturveränderung die Energiebilanz aus zugeführter und abgeführter Energie ermittelt werden.

Diese Energie-/Leistungsbilanz kann allerdings alleine nicht für eine Regelung verwendet werden.

Deshalb wird weiter eine auszugleichende Temperaturdifferenz zwischen der Soll- und Ist-Temperatur indirekt als virtuelle Energie berücksichtigt, welche (automatisch) eine Regelabweichung beinhaltet.

Die sich aus einer Gesamtenergiebilanz von zugeführter, abgeführter und virtueller Energie über das System ergebende Gesamtenergie kann bzw. wird als Regeldifferenz bzw. Regelfehler ausgeregelt werden bzw. ausgeregelt, im Gegensatz zu einer Temperaturdifferenz als Regeldifferenz bzw. Regelfehler bei herkömmlichen direkten Temperaturregelungen.

Dieser erfindungsgemäße indirekte, Energie-orientierte Regelansatz ermöglicht ein frühzeitiges Erkennen von Einflüssen auf ein System, welche zu einer unerwünschten Temperaturänderung führen.

Dieses ermöglicht wiederum einen frühen Regelausgleich bzw. Regeleinsatz unter Verwendung eines einfachen Reglers, beispielsweise eines solchen vom Typ PI-Regler.

Anzumerken ist, dass auch beliebige andere Regler-Typen, wie ein P-, I-, D-oder PID-Regler, einsetzbar sind.

Dadurch kann bei der Erfindung schnellen und/oder abrupt auftretenden Systemstörungen, welche zu unerwünschten schnellen und/oder abrupten Temperaturänderungen im System führen, frühzeitig entgegengewirkt werden und damit eine hohe Temperaturkonstanz in dem System erreicht werden.

Bevorzugte Weiterbildungen und Ausführungsformen der Erfindung ergeben sich aus den abhängigen Ansprüchen.

Die im weiteren beschriebenen Ausführungsformen und/oder Weiterbildungen beziehen sich sowohl auf das Verfahren und die Anordnung als auch auf das Computerprogramm und auf das Computer-Programmprodukt.

Die Erfindung und die im weiteren beschriebenen Ausführungsformen und Weiterbildungen können sowohl in Software als auch in Hardware, beispielsweise unter Verwendung einer speziellen elektrischen Schaltung oder einer sogenannten Speicher programmierbaren Steuerung, kurz SPS, realisiert werden.

Ferner ist eine Realisierung der Erfindung oder einer im weiteren beschriebenen Weiterbildung bzw. Ausführungsform möglich durch ein computerlesbares Speichermedium, auf welchem das Computerprogramm mit Programmcode-Mitteln gespeichert ist, welches die Erfindung oder Weiterbildung bzw. Ausführungsform ausführt.

Auch kann die Erfindung oder jede im weiteren beschriebene Weiterbildung bzw. Ausführungsform durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung bzw. Ausführungsform ausführt.

In einer bevorzugten Ausführungsform ist die Regeleinheit ein Regler oder ein entsprechender Regel-/Regleralgorithmus von einem bekannten Typ P (Proportional-Regler), I (Integral-Regler) oder D (Differential-Regler) oder Mischformen hiervon, wie ein bekannter Typ PI oder PID. Diese verschiedenen Reglertypen sind hinlänglich aus dem Stand der Technik bekannt.

In solchen Fällen wird die Steuergröße meist als sogenannte Stellgröße bezeichnet.

Eine bevorzugte Ausführungsform ist derart weitergebildet, dass die Steuergröße bzw. die Stellgröße einer Steuereinrichtung bzw. einem sogenannten Stellglied, wie einer Heiz-/Kühleinrichtung, beispielsweise einem Wärmetauscher, zugeführt wird.

Diese bzw. dieser wirkt dann auf den Ausgleich der auszugleichenden Temperaturdifferenz hin, beispielweise durch ein Heizen oder Kühlen des Systems.

In einer weiteren Ausführungsform umfasst die Temperaturermittlungseinheit mindestens ein Thermometer, insbesondere mindestens ein Widerstandsthermometer, beispielsweise von einem aus dem Stand der Technik bekannten Typ PT100.

In diesem Fall erfolgt die Ermittlung der Ist-Temperatur durch ein Messen an mindestens einem Ort im System.

Werden mehrere Widerstandsthermometer verwendet bzw. die Temperatur an mehreren Orten im System gemessen, so kann die Ist-Temperatur durch eine gegebenenfalls gewichtete Mittelwertbildung über einzelne Messwerte bestimmt werden.

Es ist zweckmäßig, die zugeführte und die abgeführte Energie gemäß folgender Überlegung zu bestimmen, nämlich dass sich die Summe dieser Energieströme in einer Veränderung der Systemtemperatur, insbesondere eines das System durchströmenden Luftmassenstroms, auswirkt.

Diese Temperaturveränderung kann mit dem Luftmassenstrom, welcher das System durchströmt, und mit einer Wärmekapazität der Luft, einem sogenannten Cp-Luft, multipliziert werden, wobei sich die Energiebilanz über zugeführter und abgeführter Energie ergibt.

Weiter kann bei der dem System bzw. dem Luftmassenstrom des Systems zugeführten oder abgeführten Energie eine dem System durch das Stellglied, beispielsweise durch den Wärmetauscher, zugeführte oder abgeführte Energie berücksichtigt werden.

Diese kann über eine Temperaturänderung im Stellglied, wie der Temperaturänderung einer Wärmetauscherflüssigkeit, beispielsweise einer sogenannten Sole, berücksichtigt werden.

Diese weiter berücksichtigbare Teilenergie der zugeführten und abgeführten Energie kann beispielweise unter Verwendung einer Multiplikation der Temperaturänderung der Wärmetauscherflüssigkeit mit einem Massenstrom der Wärmetauscherflüssigkeit und weiter mit einer Wärmekapazität der Wärmetauscherflüssigkeit, einem sogenannten Cp-Wärmetauscherflüssigkeit, ermittelt werden.

Die Bedarfsenergie zum Ausgleich der auszugleichenden Temperaturdifferenz kann nach folgendem, entsprechendem Ansatz wie oben ermittelt werden. Hier kann die auszugleichende Temperaturdifferenz ebenfalls mit dem Luftmassenstrom des Systems und mit einer Wärmekapazität der Luft, einem sogenannten Cp-Luft, multipliziert werden, wobei sich die Bedarfsenergie (virtuelle Energie) ergibt.

Zusätzlich kann bei der Gesämtenergie des Systems eine sogenannte Dengelleistung/-energie mitberücksichtigt werden.

Diese kann eingeführt werden, um erstens Messungenauigkeiten auszugleichen und zweitens Temperaturrampen präzise fahren zu können. Hinter der Dengelleistung steckt anschaulich eine konventionelle Temperaturregelung.

Bei einer bevorzugten Weiterbildung ist das System ein Klimawindkanal, beispielsweise ein Klimawindkanal von einem Typ "Göttinger Bauart". Allerdings kann das System auch für andere Industrieelle Anwendungen verwendet werden, bei denen ein schnelles Ausregeln der Temperatur bei hoher Dynamik gefragt ist.

Ferner kann bei einer Realisierung der Erfindung oder einer ihrer Weiterbildungen bzw. Ausführungsformen eine sogenannte Speicher programmierte Steuerung, kurz SPS, vorgesehen werden. Diese kann derart programmiert sein, dass sie das erfindungsgemäße Verfahren oder dessen Weiterbildungen bzw. Ausführungsformen zumindest zum Teil ausführt.

In diesen Fall können erfindungsgemäße Einheiten Programmteile und/oder Module der programmierten SPS sein.

In Figuren ist ein Ausführungsbeispiel der Erfindung dargestellt, welches im weiteren näher erläutert wird. Aus den Figuren und deren Erläuterungen ergeben sich weitere Vorteile, Merkmale und Anwendungsmöglichkeiten der Erfindung.

Es zeigen
- Figur 1: eine Skizze einer erfindungsgemäßen Vorgehensweise zu einer Temperaturregelung in einem Klimawindkanal gemäß einem Ausfüh- rungsbeispiel;
- Figur 2: eine Skizze mit einem Regelkreis für eine erfindungsgemäße Tem- peraturregelung in einem Klimawindkanal gemäß einem Ausfüh- rungsbeispiel;
- Figur 3: eine Skizze eines mit einem herkömmlichen Reglers auf Basis einer direkten Temperatur-Regelung geregelten Temperaturverlaufs in ei- nem Klimawindkanal gemäß einem Ausführungsbeispiel;
- Figur 4: eine Skizze eines mit einem erfindungsgemäßen Regler auf Basis einer indirekten Energie-/Leistungs-Regelung geregelten Tempera- turverlaufs in einem Klimawindkanal gemäß einem Ausführungsbei- spiel;
- Figur: 5 eine Skizze eines mit einem herkömmlichen PID-Regler auf Basis einer direkten Temperatur-Regelung geregelten Temperaturverlaufs in einem Klimawindkanal im Vergleich eines mit einem erfindungs- gemäßen Regler auf Basis einer indirekten Energie-/Leistungs- Regelung geregelten Temperaturverlaufs in einem Klimawindkanal gemäß einem Ausführungsbeispiel.

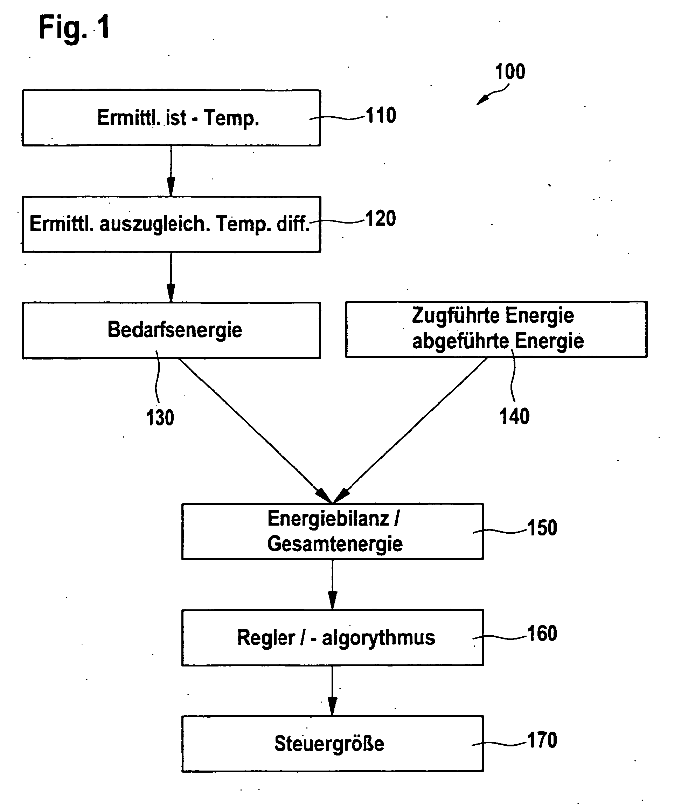

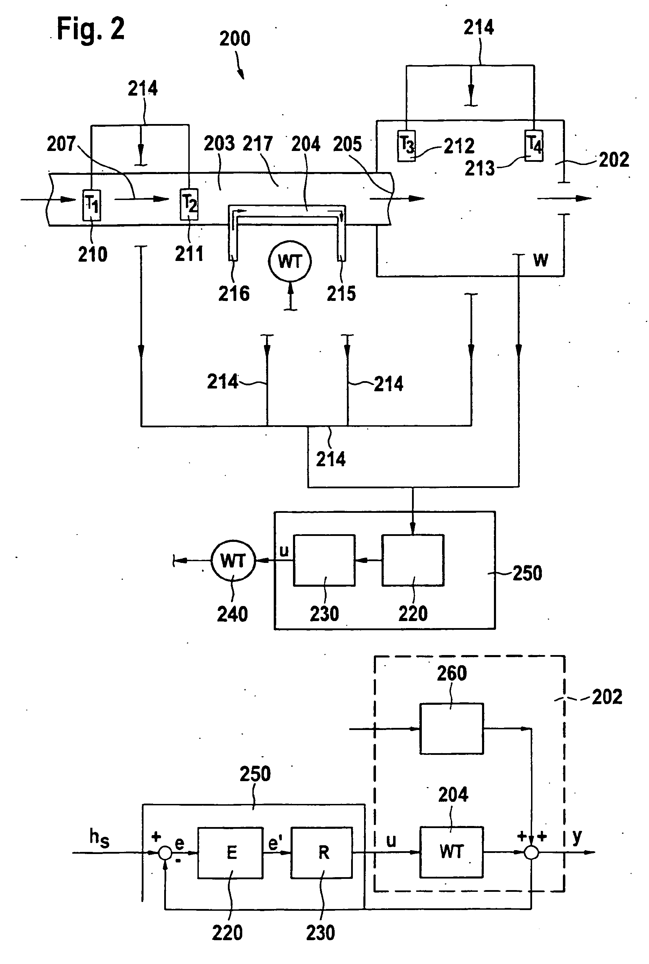

Ausführungsbeispiel: Temperatur-Regelung in einem Klimawindkanal auf Basis einer Energie-/Leistungsbilanz im Klimawindkanal
Fig.1 und Fig.2 zeigen eine Vorgehensweise 100 sowie ein Regelsystem 200 für eine erfindungsgemäße Temperatur-Regelung bei einem ausführungsgemäßen Klimawindkanal 201.

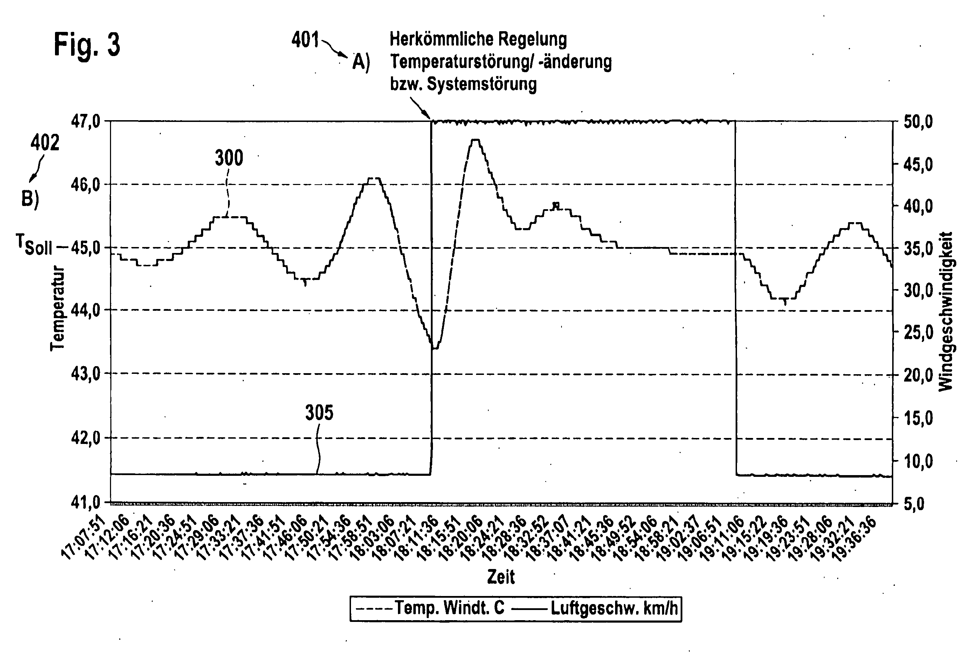

Fig.3, Fig.4 und Fig.5 zeigen geregelte Temperaturverläufe mit einem herkömmlichen PID-Regler auf Basis einer direkten Temperatur-Regelung und mit einem erfindungsgemäßen Regler auf Basis einer indirekten Energie-/Leistungs-Regelung bei dem ausführungsgemäßen Klimawindkanal 201.

### A) (Geregelter) Klimawindkanal "Göttinger Bauart" (201)

Der regelbare Klimawindkanal 201 ist in einer bekannten "Göttinger" Bauart ausgeführt.

Klimatisierte Luft bzw. Luftmasse wird bei dem Klimawindkanal 201 solcher Bauart in einem geschlossenen Kreislauf geführt. Ein Gebläse fördert die Luft bzw. Luftmasse 207 über einen langen Diffusor 203 zu einem Wärmetauscher 204.

Zur Messung einer Luftmassentemperatur sind in dem Diffusor 203 an zwei Orten zwei Widerstandsthermometer einer bekannten Bauart PT100 210 bzw. 211 angebracht. Ebenfalls weist der Diffusor 203 eine Durchflussmesseinrichtung auf, mit welcher der Luftmassenstrom 207 messbar ist.

Der Wärmetauscher 204 weist in seinem Zufluss einen ersten Temperaturfühler 216 auf, mit welchem die Temperatur der zuströmenden Wärmetauscherflüssigkeit 217, der Sole 217, messbar ist.

In seinem Abfluss weist der Wärmetauscher 204 einen zweiten Temperaturfühler 215 auf, mit welchem die Temperatur der abströmenden Sole 217 messbar ist.

Femer weist der Wärmetauscher 204 eine Durchflussmesseinrichtung auf, mit welcher der durchfließende Massenstrom der Sole 217 messbar ist.

Der Wärmetauscher 204 wird über eine nachfolgend im Detail beschriebenen Steuerung auf Basis einer indirekten Temperatursteuerung geregelt bzw. gesteuert 100 bzw. 200.

Die Luft wird gesteuert temperiert, von -30 °C bis +50 °C ist jeder Wert einstellbar. Über zwei beschaufelte Umlenkecken gelangt die Luft in eine Vorkammer.

Ein Gleichrichter und Siebe sind nicht vorhanden, und trotzdem weist der Klimawindkanal eine hohe Strömungsqualität auf. Windgeschwindigkeit und Windtemperatur sind sehr gleichmäßig über einen Strahlquerschnitt verteilt.

Eine Kontraktion einer Düse 205, in der die Luft beschleunigt wird, ist auf zwei Abschnitte aufgeteilt. Im ersten Abschnitt erfolgt ein Einzug nur horizontal; Decke und Boden bleiben eben.

Im zweiten Abschnitt bleiben dagegen Seitenwände plan und der Einzug wird über eine Vertikale bewältigt. Dabei bleibt eine untere Kontur immer gleich. Eine obere hingegen kann in einer Höhe verfahren werden.

Dadurch ist es möglich, eine vergleichsweise kleine Düse mit einem Querschnitt von 6 m2 zu formen, was für eine Untersuchung von Pkw ausreichend ist.

In zwei Schritten kann eine obere Düsenwand angehoben und dank ihrer Elastizität auf strömungsgünstiger Kontur gehalten werden ― der dadurch entstehende Querschnitt von 8 m2 ist geeignet für die Untersuchung für Vans oder Transporter. Bei weiterer Vergrößerung des Querschnitts auf 10 m2 ist der Klimawindkanal geeignet für die Untersuchung von (schweren) Lkws.

Eine Windgeschwindigkeit beträgt bei den drei Querschnitten 130 km/h, 100 km/h und 80 km/h.

Aus der Düse tritt die Luft in die offene Messstrecke, umströmt ein Fahrzeug, wird hinter diesem von einem Kollektor, ähnlich einem großen Trichter aufgefangen und, damit sich der Kreislauf schließt, über zwei Umlenkecken dem Gebläse wieder zugeführt.

An einer Decke des Klimawindkanals bzw. einer Messhalle 202 ist ein Solarium angebracht. 18 Lampen, mit denen ein Spektrum eines Sonnenlichtes nachgebildet wird, ermöglichen eine Strahlungsintensität von bis zu 1200 W/m2.

Ein Gestell ermöglicht es, eine Einfallsrichtung von Sonnenstrahlen frei zu wählen. Die Lampen sind mit Klappen versehen, mit denen das Licht schlagartig abgeschattet werden kann.

Eine relative Luftfeuchte kann durch Zugabe von Dampf oder extrem trockener Luft in einem Bereich bis zu 95 % genau eingestellt werden.

Zur Messung der in der Messhalle herrschenden Temperatur sind in der Messhalle an zwei Punkten Widerstandsthermometer der bekannten Bauart PT100 212 bzw. 213 angebracht.

Die Widerstandsthermometer 210, 211 im Diffusor 203, die Thermometer 215, 216 im Wärmetauscher 204 sowie die Widerstandsthermometer 212, 213 in der Messhalle 202 sind über entsprechende Signalleitungen 214 mit einer Steuereinheit, einer SPS-Steuerung 250, verbunden.

Auch sind die Durchflussmesseinrichtungen des Diffusors 204 und des Wärmetauschers 204 mit der SPS-Steuerung 250 verbunden.

Die SPS-Steuerung 250 ist entsprechend der nachfolgend beschriebenen indirekten Temperatur-Regelung auf Basis einer Energie-/Leistungsbilanz im Klimawindkanal 201 (Fig.1, Fig.2) programmiert.

Kühlung und Klimatisierung können so in ihrem Zeitverhalten im Windkanal 201 geändert und optimiert werden.

### B) Grundkonzept der ausführungsgemäßen indirekten Temperatur-Regelung auf Basis einer Energie-/Leistungsbilanz im Klimawindkanal 201 (Fig.1, 100)

Fig.1 zeigt eine grundsätzliche Vorgehensweise 100 bei der ausführungsgemäßen Regelung.

Bei dieser ausführungsgemäßen Regelung 100 wird zu einem vorgebbaren Zeitpunkt eine Ist-Temperatur des Systems, des Klimawindkanals, ermittelt 110, welche mit einer vorgebbaren Soll-Temperatur des Systems verglichen wird 120. Bei dem Vergleich 120 wird eine auszugleichende Temperaturdifferenz des Systems ermittelt 120.

Es wird weiter eine Bedarfsenergie ermittelt 130, welche notwendig ist zu einem Ausgleich der ermittelten, auszugleichenden Temperaturdifferenz.

Zu dem vorgebbaren Zeitpunkt werden eine dem System zugeführte Energie und eine von dem System abgeführte Energie ermittelt 140.

Unter Verwendung der Bedarfsenergie, der dem System zugeführten Energie und der vom System abgeführten Energie wird eine resultierende Gesamtenergie des Systems bestimmt 150, aus welcher unter Verwendung eines Regelverfahrens eines Reglers 160 die Steuergröße für die Temperaturregelung ermittelt 170 wird.

### C) Problemstellung bei der ausführungsgemäßen Regelung

Verschiedene Untersuchungen im oben beschriebenen Klimawindkanal 201, wie zum Beispiel Leistungsuntersuchungen von Fahrzeugklimaanlagen, setzen eine hohe Klimakonstanz, insbesondere eine hohe (Wind-)Temperaturkonstanz, in dem Klimawindkanal voraus,

Zur Ausregelung von schnellen und abrupten Änderungen bzw. Störungen der (Wind-)Temperatur und/oder schnellen und abrupten Änderungen von auf die Temperatur einwirkenden Randbedingungen, wie Störungen der Windgeschwindigkeit, Störungen der simulierten Sonneneinstrahlung, Störungen der Luftfeuchte im Windkanal und/oder ein Starten eines Motors eines zu untersuchenden Fahrzeugs im Windkanal 260, weist der ausführungsgemäße Klimawindkanal 201 eine spezielle Regelung 100 auf Basis einer indirekten Temperaturregelung 100 bzw. auf Basis einer Energie/Leistungsbilanz im Windkanal auf.

### D) Indirekte Temperatur-Regelung auf Basis einer Energie-/Leistungsbilanz im Klimawindkanal (Fig.1, Fig.2)

Fig.2 zeigt schematisch ein ausführungsgemäßes, indirektes Temperatur-Regelsystem 200 bzw. eine ausführungsgemäß, indirekte Temperatur-Regelung 200 auf Basis einer Energie-/Leistungsbilanz im Klimawindkanal 201.

Diese Regelung bzw. dieser Regelung zugrundeliegende Algorithmen sind im Rahmen einer sogenannten SPS-Steuerung 250 auf einem Steuerrechner programmiert.

Ein derartiges ausführungsgemäßes Temperatur-Regelsystem 200 versucht im Allgemeinen eine Temperatur im Windkanal 201, konstant zu halten oder nach einem vorgeschriebenem Programm zu ändern, unabhängig von irgendwelchen Störungen oder Störgrößen 260.

Dazu wird die zu regelnde Größe (Regelgröße), in diesem Fall die Hallentemperatur, mittels der zwei Widerstandsthermometer 212 und 213 laufend gemessen und gemittelt.

Die gemessene Regelgröße, die gemittelte Messhallentemperatur, wird der ausführungsgemäßen Regeleinrichtung 250, kurz dem ausführungsgemäßen Regler 250, zur Verfügung gestellt bzw. zugeführt.

Weiter wird die Temperatur des Luftstroms 207 vor dem Wärmetauscher 204 mittels der zwei Widerstandsthermometer 210 und 211 laufend gemessen und gemittelt sowie dem ausführungsgemäßen Regler 250 zugeführt.

Zusätzlich wird im Wärmetauscher 204 die Temperaturen der Sole vor 216 und nach 215 dem Wärmetausch gemessen. Auch diese werden dem ausführungsgemäßen Regler 250 zugeführt.

Weiter werden die Massenströme der Luft 207 sowie der Sole 217 gemessen und dem ausführungsgemäßen Regler 250 zugeführt.

Teil des ausführungsgemäß Reglers 250 ist ein bekannter PI-Regler 230, welcher im Rahmen der SPS-Steuerung programmiert ist bzw. dessen Regelalgorithmen im Rahmen der SPS-Steuerung programmiert sind.

Unter Verwendung des Reglers 250, insbesondere des PI-Reglers 230, wird die Steuergröße u ermittelt, um die Regeldifferenz bzw. der Regelfehler, in diesem Fall eine Energiedifferenz e' an Stelle einer Temperaturdifferenz e wie bei einer herkömmlichen Temperatur-Regelung, zu beseitigen.

Mit dieser Steuergröße u wird der Wärmetauscher 204 so gesteuert bzw. betätigt, dass die Regeldifferenz bzw. Energiedifferenz e' beseitigt wird. Damit wird indirekt auch die auszugleichende Temperaturdifferenz zwischen Istund Solltemperatur in der Messhalle 202 beseitigt und die Temperatur in der Messhalle 202 damit konstant gehalten.

Im folgenden wird die Ermittlung der Steuergröße u näher beschrieben.

Die ausführungsgemäße, indirekte Temperatur-Regelung auf Basis einer Energie-/Leistungsbilanz im Klimawindkanal 201 basiert darauf, dass der zu regelnde Prozessparameter bzw. die Regelgröße - in diesem Fall die Temperatur der Messhalle 202 - als Ergebnis von Energieumsätzen im System "Klimawindkanal" 201 angesehen wird.

Im Allgemeinen gilt, dass eine Energiebilanz über den Windkanal 201 zu jedem Zeitpunkt ausgeglichen sein muss.

Um aber eine regelbare Größe zu erhalten, wird eine virtuelle Energie/Leistung eingeführt und bei der Energiebilanz mitberücksichtigt.

Die virtuelle Energie/Leistung ist diejenige Energie/Leistung, die notwendig ist bzw. dem System "Klimawindkanal" 201 zugeführt bzw. von diesem abgeführt werden muss, um die Temperaturdifferenz zwischen der aktuellen Messhallentemperatur und der Solltemperatur in der Messhalle 202 auszugleichen.

Diese virtuelle Energie/Leistung beinhaltet damit indirekt die herkömmliche auszuregelnde Regelabweichung, da bei der virtuellen Energie, diejenige Energie berechnet wird, welche notwendig wäre, die herkömmliche Regelabweichung unmittelbar zu beseitigen.

Um nicht sämtliche Energieströme, die in den Klimawindkanal 201 zu- oder abfließen einzeln zu erfassen, wird der Regelung des Klimawindkanals 201 folgende Überlegung zu Grunde gelegt: Die Summe aller Energieströme (Energiebilanz) wirkt sich in einer Veränderung der Temperatur der umgewälzten Luft nach und vor dem Wärmetauscher aus.

Bei der Regelung wird dies mit einem Term "Leistung Kanal" beschrieben.

Die Energie, die dem Luftmassenstrom 207 zugeführt oder entnommen wird, muss durch den Wärmeaustauscher 204 ausgeglichen werden.

Der Wärmetauscher 204 muss die virtuelle Energie bereitstellen. Es gilt auch hier, dass die Energien eine Veränderung der Temperatur der Sole, die durch den Wärmetauscher 204 strömt, bewirken.

Über diese Temperaturveränderung wird eine "Leistung Sole" berechnet.

Ein weiterer Bestandteil der Berechnung ist eine sogenannte Dengelleistung. Diese wird eingeführt, um erstens Messungenauigkeiten auszugleichen und zweitens Temperaturrampen präzise fahren zu können.

Anschaulich verbirgt sich hinter der Dengelleistung eine konventionelle Temperaturregelung.

Es gilt somit bei der ausführungsgemäßen Temperatur-Regelung:
1)Mittelwert(T_{Luft vor WT}) = (Temp 210 + Temp 211 )/2
2) ΔT_{Luft-Kanal} = Mittelwert(T_{Luft vor WT}) - T_{Luft-Kana}
3) ΔTᵥᵢᵣₜᵤₑₙ = T_{Luft-Kanal} - Tₛₒₗₗ
4) ΔTₛₒₗₑ = Temp 215 - Temp 216
5) ρ_{Luft} = (((Temp 212 + Temp 213)/2) * 1000)/(287,1 * (273.15 + T_{Luft-Kanal}))
6) Luftmassenstrom = Düsengröße * ρ_{Luft} * Luftgeschwindigkeit/3,6
7) Massenstrom-Sole = (Messwert * 1000/60) * Korrekturfaktor * 1,37 x 0,001
8) Leistung Kanal = Cp-Luft * ΔT_{Luft-Kanal} * Luftmassenstrom
9) Leistung Virtuell = Cp-Luft * ΔTᵥᵢᵣₜᵤₑₗₗ * Luftmassenstrom
10) Leistung Wärmetauscher = Cp-Sole * ΔTₛₒₗₑ * Massenstrom Sole
11a) Leistungs-/Energiebilanz = Leistung Kanal + Leistung virtuell + Leistung Wärmetauscher (Fig.2, 220)
11b) Erweiterte Leistungs-/Energiebilanz = Leistung Kanal + Leistung virtuell + Leistung Wärmetauscher + Dengelleistung (Fig.2, 220)

Bei der ausführungsgemäßen Regelung wird die Leistungs-/Energiebilanz bzw. die erweiterte Leistungs-/Energiebilanz auf Null geregelt.

Anzumerken ist, dass obige Beziehungen beispielhaft ohne Beschränkung der Allgemeinheit den erfinderischen Ansatz umsetzen.

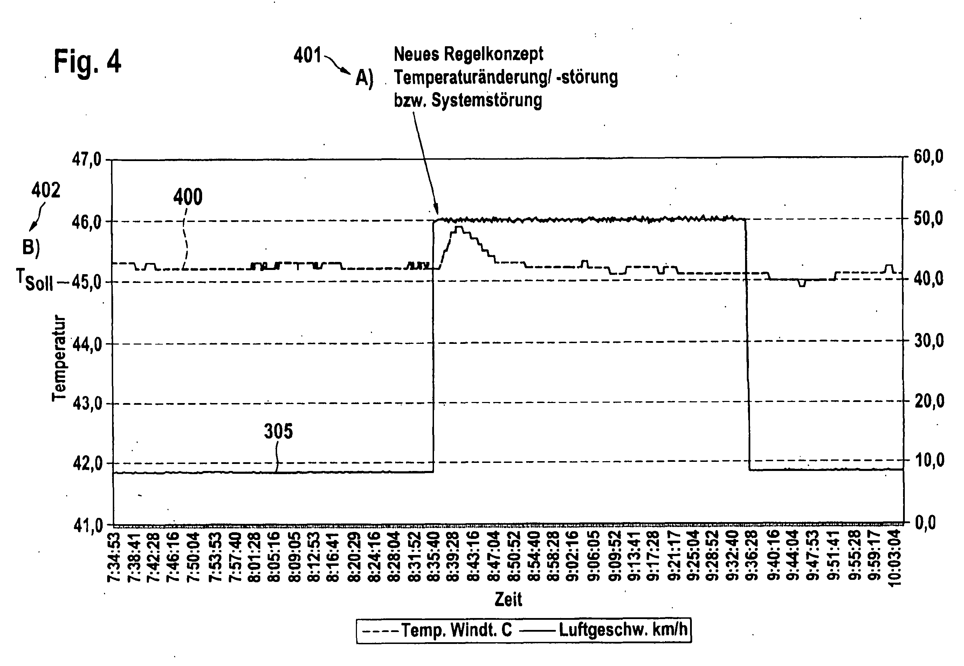

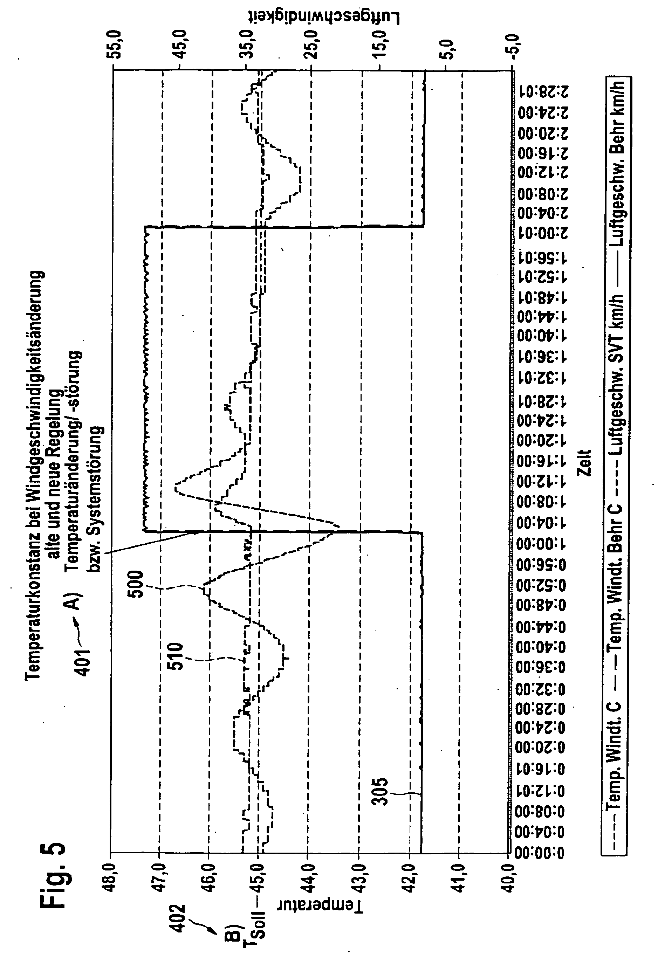

In Fig.3, Fig.4 und in Fig.5 sind ein durch einen herkömmlichen Temperaturregler geregelter Temperaturverlauf 300 bzw. 510 sowie ein entsprechend obigem ausführungsgemäßen indirekten Regelsystem geregelter Temperaturverlauf 400 bzw. 500 des Klimawindkanals 200 dargestellt.

Ein Punkt A 401 kennzeichnet in den Figuren 3, 4 und 5 einen Zeitpunkt eines Eintretens einer Temperaturstörung bzw. Temperaturänderung. Diese wird durch eine plötzliche Änderung einer Luftgeschwindigkeit des Luftmassenstroms im Kanal 200 bewirkt.

Mit dem Bezugszeichen 305 ist in den Figuren 3 bis 5 jeweils ein Verlauf 305 der Luftgeschwindigkeit gekennzeichnet.

Eine Linie B 402 kennzeichnet eine gewünschte, möglichst konstant zu haltende Raumtemperatur.

## Patentansprüche

1. Verfahren zur Ermittlung einer Steuergröße für eine Temperaturregelung für ein System, bei dem
- zu einem Zeitpunkt eine Ist-Temperatur des Systems ermittelt wird (110),
- die Ist-Temperatur mit einer vorgebbaren Soll-Temperatur des Systems verglichen wird (120), wobei eine auszugleichende Temperaturdifferenz des Systems bestimmt wird,
- eine Bedarfsenergie ermittelt wird (130), welche notwendig ist zu einem Ausgleich der ermittelten, auszugleichenden Temperaturdifferenz in dem System,
- zu dem Zeitpunkt die Energiebilanz aus einer dem System zugeführten Energie und einer von dem System abgeführten Energie ermittelt wird (140),
- unter Verwendung der Bedarfsenergie und der Energiebilanz aus zugeführter Energie und abgeführter Energie eine resultierende Gesamtenergie des Systems bestimmt wird (150),
- unter Verwendung eines Regelverfahrens eines Reglers aus der resultierenden Gesamtenergie die Steuergröße für die Temperaturregelung ermittelt wird (160), wobei
- die Energiebilanz aus zugeführter und abgeführter Energie unter Verwendung einer Veränderung einer Systemtemperatur entlang eines das System durchströmenden Luftmassenstroms bestimmt wird, wobei die Energiebilanz aus zugeführter und abgeführter Energie sich in der Veränderung der Systemtemperatur auswirkt,
**dadurch gekennzeichnet, dass**
die Energiebilanz aus zugeführter und abgeführter Energie unter Verwendung der Veränderung der Systemtemperatur derart bestimmt wird, dass die Veränderung der Systemtemperatur mit dem Luftmassenstrom, welcher das System durchströmt, und mit einer Wärmekapazität des Luftmassenstroms multipliziert wird,
- wobei die Bedarfsenergie unter Verwendung der ermittelten, auszugleichenden Temperaturdifferenz derart bestimmt wird, dass die ermittelte, auszugleichende Temperaturdifferenz mit dem Luftmassenstrom, welcher das System durchströmt, und mit einer Wärmekapazität des Luftmassenstroms multipliziert wird.

2. Verfahren nach Anspruch 1,
bei dem das Regelverfahren ein Regelverfahren eines Reglers (250) von einem Typ P (Proportional-Regler), I (Integral-Regler) oder D (Differential-Regler) oder einer Mischform hiervon, insbesondere von einem Typ PI oder PID, ist.

3. Verfahren nach Anspruch 1 oder 2,
bei dem unter Verwendung der Steuergröße (u) ein Stellglied, insbesondere ein Wärmetauscher, geregelt und/oder gesteuert wird.

4. Verfahren nach Anspruch 3,
bei dem das Stellglied auf den Ausgleich der auszugleichenden Temperaturdifferenz hinwirkt, insbesondere durch ein Heizen oder Kühlen des Systems.

5. Verfahren nach mindestens einem der vorangehenden Ansprüche,
bei dem die Ist-Temperatur mindestens an einem Ort Im System gemessen wird und/oder eingelesen wird, insbesondere von einem Speicher.

6. Verfahren nach mindestens einem der vorangehenden Ansprüche,
bei dem bei der Gesamtenergie eine Leistung mitberücksichtigt wird, welche Messungenauigkeiten ausgleicht und/oder eine Temperaturrampe repräsentiert, und/oder eine Leistung eines Stellglieds, insbesondere eines Wärmetauschers, mitberücksichtigt wird.

7. Verfahren nach mindestens einem der vorangehenden Ansprüche,
welches im Rahmen einer sogenannten Speicher programmierten Steuerung (SPS) realisiert und/oder programmiert ist.

8. Anordnung zur Ermittlung einer Steuergröße für eine Temperaturregelung für ein System mit
- mindestens einer Temperaturermittlungseinheit, mit welcher eine Ist-Temperatur des Systems ermittelbar ist,
- mindestens einer Vergleichseinheit, mit welcher durch Vergleich der Ist-Temperatur mit einer vorgebbaren Soll-Temperatur des Systems eine auszugleichende Temperaturdifferenz des Systems ermittelbar ist,
- mindestens einer Energieermittlungseinheit, mit welcher die Energiebilanz aus einer dem System zugeführten Energie und einer von dem System abgeführten Energie und eine Bedarfsenergie ermittelbar sind, welche Bedarfsenergie notwendig ist zu einem Ausgleich der auszugleichenden Temperaturdifferenz des Systems, und mit welcher eine resultierende Gesamtenergie unter Verwendung der Bedarfsenergie und der Energiebilanz aus zugeführter Energie und abgeführter Energie bestimmbar ist, und
- einer Reglereinheit, mit welcher unter Verwendung der Gesamtenergie die Steuergröße für die Temperaturregelung ermittelbar ist,
**dadurch gekennzeichnet, dass**
die Anordnung zur Durchführung eines Verfahrens nach einem der Ansprüche 1 bis 7 angepasst ist.

9. Anordnung nach Anspruch 8,
- bei der die Reglereinheit ein Regler von einem Typ P (Proportional-Regler), I (Integral-Regler) oder D (Differential-Regler) oder einer Mischform hiervon ist.

10. Anordnung nach Anspruch 8 oder 9,
- bei der die Temperaturermittlungseinheit ein Thermometer, insbesondere ein Widerstandsthermometer, ist

11. Anordnung nach mindestens einem der Ansprüche 8 bis 10,
bei der das System ein Raum, insbesondere ein Wohnraum, oder ein Klimawindkanal, insbesondere ein Klimawindkanal von einem Typ "Göttinger Bauart", ist.

12. Anordnung nach mindestens einem der Ansprüche 8 bis 11,
die im Rahmen einer sogenannten Speicher programmierten Steuerung (SPS) realisiert ist.

13. Computerprogramm mit Programmcode-Mitteln, um alle Schritte gemäß Anspruch 1 durchzuführen, wenn das Programm auf einem Computer ausgeführt wird.

14. Computerprogramm mit Programmcode-Mitteln gemäß dem vorangehenden Anspruch, welche Programmcode-Mitteln auf einem computerlesbaren Datenträger gespeichert sind.

15. Computerprogramm-Produkt mit auf einem maschinenlesbaren Träger gespeicherten Programmcode-Mitteln, um alle Schritte gemäß Anspruch 1 durchzuführen, wenn das Programm auf einem Computer ausgeführt wird.

## Claims

1. A method for the determination of a control variable for the temperature regulation of a system, in which
- an actual temperature of the system is determined at a point in time (110),
- the actual temperature is compared with a specifiable setpoint temperature of the system (120), wherein a temperature difference of the system to be equalized is determined,
- the energy requirement is determined (130) that is necessary to equalize the temperature difference in the system that was ascertained and should be equalized,
- at the point in time, the energy balance is determined in the basis of the energy supplied to the system and the energy withdrawn from the system (140),
- a resulting total energy of the system is determined (150) on the basis of the energy requirement and the energy balance of supplied energy and withdrawn energy,
- using a control method of a controller, the control variable for temperature regulation is determined on the basis of the resulting total energy (160), wherein
- the energy balance of supplied and withdrawn energy is determined on the basis of a change in a system temperature along an air mass flow flowing through the system, wherein the energy balance of supplied and withdrawn energy results in the change in system temperature, **characterized in that** the energy balance of supplied and withdrawn energy is determined on the basis of the change in system temperature such that the change in system temperature is multiplied by the air mass flow that flows trough the system, and by a heat capacity of the air mass flow,
- wherein the energy requirement is determined on the basis of the temperature difference that was ascertained and should be equalized, in such a way that the temperature difference that was ascertained and should be equalized is multiplied by the air mass flow that flows through the system, and by a heat capacity of the air mass flow.

2. The method according to claim 1, wherein the control method is a control method of a controller (250) of type P (proportional controller), (integral controller) or D (differential controller), or is a combined form thereof, in particular of type PI or PID.

3. The method according to claim 1 or 2, wherein an actuator, in particular a heat exchanger, is regulated and/or controlled using the control variable (u).

4. The method according to claim 3, wherein the actuator acts to equalize the temperature difference to be equalized, in particular by heating or cooling the system.

5. The method according to at least one of the preceding claims, wherein the actual temperature is measured and/or read in by a computer, in particular - at at least one location in the system.

6. The method according to at least one of the preceding claims, wherein an output that equalizes measurement inaccuracies and/or represents a temperature ramp is taken into account in the total energy, and/or an output of an actuator, in particular a heat exchanger, is taken into account.

7. The method according to at least one of the preceding claims, which is realized and/or programmed within the scope of a programmable logic controller (PLC).

8. A system for the determination of a control variable for the temperature regulation of a system, comprising
- at least one temperature determination unit with which an actual temperature of the system can be determined,
- at least one comparator unit with which a temperature difference of the system - which should be equalized - can be determined by comparing the actual temperature with a specifiable setpoint temperature of the system,
- at least one energy determination unit with which the energy balance of energy supplied to the system and energy withdrawn from the system, and an energy requirement can be determined, said energy requirement being needed to equalize the temperature difference of the system to be equalized, and with which a resulting total energy can be determined on the basis of the energy requirement and the energy balance of supplied energy and withdrawn energy, and
- a control unit with which the control variable for temperature regulation can be determined on the basis of the total energy,
**characterized in that**
the system for carrying out a method according to one of the claims 1 to 7 is adapted.

9. The system according to claim 8,
- wherein the control unit is a controller of a type P (proportional controller), I (integral controller) or D (differential controller), or a combined form thereof.

10. The system according to claim 8 or 9,
- wherein the temperature determination unit is a thermometer, in particular a resistance thermometer.

11. The system according to at least one of the claims 8 to 10, wherein the system is a room, in particular a domestic space, or a climate wind tunnel, in particular a wind tunnel of the Göttinger type.

12. The system according to at least one of the claims 8 to 11, which is realized within the scope of a programmable logic controller (PLC).

13. A computer program comprising program code means for performing all steps according to claim 1 when the program is run on a computer.

14. The computer program with program code means according to the preceding claim, said program code means being stored on a computer-readable data carrier.

15. A computer program product comprising program code means stored on a machine-readable carrier for performing all steps according to claim 1 when the program is run on a computer.

## Revendications

1. Procédé servant à déterminer une variable de commande pour une régulation de température pour un système, procédé dans lequel
- est déterminée (110), à un moment donnée, une température réelle du système,
- la température réelle est comparée (120) à une température théorique donnée du système, où est définie une différence de température du système, à compenser,
- est déterminée (130) une énergie complémentaire qui est nécessaire pour une compensation de la différence de température déterminée, à compenser dans le système,
- à un moment donné est déterminé (140) le bilan énergétique fait à partir d'une énergie fournie au système et d'une énergie évacuée du système,
- en utilisant l'énergie complémentaire est le bilan énergétique fait à partir d'énergie fournie et d'énergie évacuée est déterminée (150) une énergie totale du système, qui en résulte,
- en utilisant un procédé de régulation d'un régulateur est déterminée (160), d'après l'énergie totale résultante, la variable de commande pour la régulation de température, où
- le bilan énergétique fait à partir d'énergie fournie et d'énergie évacuée est déterminé en utilisant une variation d'une température du système en suivant un flux massique d'air traversant le système, où le bilan énergétique fait à partir d'énergie fournie et d'énergie évacuée intervient dans la variation, de la température du système,
**caractérisé en ce que** le bilan énergétique fait à partir d'énergie fournie et d'énergie évacuée est déterminé en utilisant la variation de la température du système, de manière telle que la variation de la température du système soit multipliée par le flux massique d'air qui traverse le système, et par une capacité thermique du flux massique d'air,
- où l'énergie complémentaire est définie en utilisant la différence de température déterminée, à compenser, de manière telle que la différence de température déterminée, à compenser, soit multipliée par le flux massique d'air qui traverse le système, et par une capacité thermique du flux massique d'air.

2. Procédé selon la revendication 1, dans lequel le procédé de régulation est un procédé de régulation d'un régulateur (250) d'un type P (régulateur proportionnel), I (régulateur intégral) ou D (régulateur différentiel), ou bien d'une forme mixte de ces différents types, en particulier d'un type PI ou PID.

3. Procédé selon la revendication 1. ou 2, dans lequel un actionneur, en particulier un échangeur de chaleur, est régulé et / ou commandé en utilisant la variable de commande (u).

4. Procédé selon à revendication 3, dans lequel l'actionneur agit sur la compensation de la différence de température à compenser, en particulier par un chauffage ou un refroidissement du système.

5. Procédé selon au moins une quelconque des revendications précédentes, dans lequel la température réelle est mesurée au moins en un point du système et / ou est entrée, et particulier par une mémoire.

6. Procédé selon au moins l'une quelconque des revendications précédentes, dans lequel, dans le cas de l'énergie totale, il est tenu compte d'une puissance qui compense des imprécisions de mesure et / ou représente une rampe de température, et / ou il est tenu compte d'une puissance d'un actionneur, en particulier d'un échangeur de chaleur.

7. Procédé selon au moins l'une quelconque des revendications précédentes, qui est réalisé et / ou programmé dans le cadre du fonctionnement de ce que l'on appelle un automate programmable industriel (SPS).

8. Agencement servant à déterminer une variable de commande pour une régulation de température pour un système, comprenant :
- au moins un ensemble de détermination de température avec lequel peut être déterminée une température réelle du système,
- au moins une ensemble comparateur avec lequel, en comparant la température réelle à une température théorique donnée du système, peut être déterminée une différence de température du système, à compenser,
- au moins un ensemble de détermination d'énergie avec lequel peuvent être déterminés le bilan énergétique fait à partir d'une énergie fournie au système et d'une énergie évacuée du système, et une énergie complémentaire, laquelle énergie complémentaire est nécessaire à une compensation de la différence de température du système, à compenser, ensemble de détermination d'énergie avec lequel peut être définie une énergie totale résultante, en utilisant l'énergie complémentaire et le bilan énergétique fait à partir d'énergie fournie et d'énergie évacuée, et
- un ensemble régulateur avec lequel, en utilisant l'énergie totale, peut être déterminée la variable de commande pour la régulation de température,
**caractérisé en ce que** l'agencement est adapté à l'exécution d'un procédé selon l'une quelconque des revendications 1 à 7,

9. Agencement selon la revendication 8, dans lequel l'ensemble régulateur est un régulateur d'un type P (régulateur proportionnel), I (régulateur intégral) ou D (régulateur différentiel), ou bien d'une forme mixte de ces différents types.

10. Agencement selon la revendication 8 ou 9, dans lequel l'ensemble de détermination de température est un thermomètre, en particulier un thermomètre à résistance.

11. Agencement selon au moins l'une quelconque des revendications 8 à 10, dans lequel le système est un espace, en particulier un espace habitable, ou bien une soufflerie de climatisation, en particulier une soufflerie de climatisation de type "Gottingen".

12. Agencement selon au moins l'une quelconque des revendications 8 à 11, qui est réalisé dans le cadre du fonctionnement de ce que l'on appelle un automate programmable industriel (SPS).

13. Programme informatique comportant, des éléments de codes de programme, pour exécuter toutes les étapes conformément à la revendication 1, lorsque le programme est réalisé sur ordinateur.

14. Programme informatique comportant des éléments de codes de programme conformément à la revendication précédente, lesquels éléments de codes de programme sont mémorisés sur un support de données exploitable par l'ordinateur.

15. Produit de programme informatique comportant des éléments de codes de programme stockés sur un support exploitable par la machine, pour exécuter toutes les étapes conformément, à la revendication 1, lorsque le programme est réalisé sur ordinateur.
